Europäisches Patentamt

European Patent Office

Office européen des brevets

(19)

(11) Veröffentlichungsnummer: **0 253 976**
B1

(12) **EUROPÄISCHE PATENTSCHRIFT**

(45) Veröffentlichungstag der Patentschrift:
22.03.89

(51) Int. Cl.⁴: **B61F 9/00**, B62D 1/26

(21) Anmeldenummer: 87106982.9

(22) Anmeldetag: **14.05.87**

(54) **Spurführungseinrichtung für ein spurführbares Fahrzeug.**

(30) Priorität: 25.07.86 DE 3625283

(43) Veröffentlichungstag der Anmeldung:
27.01.88 Patentblatt 88/4

(45) Bekanntmachung des Hinweises auf die Patenterteilung:
22.03.89 Patentblatt 89/12

(84) Benannte Vertragsstaaten:
AT CH DE GB IT LI NL

(56) Entgegenhaltungen:
DE-A- 3 103 488

(73) Patentinhaber: M.A.N. Nutzfahrzeuge GmbH, Dachauer Strasse 667 Postfach 50 06 20, D-8000 München 50(DE)

(72) Erfinder: Thudt, Hubert, Adenauerstrasse 32,
D-8039 Puchheim/Bahnhof(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 253 976 B1

## Beschreibung

Die Erfindung betrifft eine Spurführungseinrichtung für ein spurführbares Fahrzeug mit wenigstens einer, einer Fahrzeugseite zugeordneten, im Spurführungsbetrieb mit einer Spurführungsleitwand zusammenwirkenden Tastrolle, die an einem Rollhalter angeordnet ist, der an einem Tastarm befestigt ist und eine Sollbruchstelle sowie ein diesseits und jenseits der letzteren befestigtes Fangseil aufweist, mit dem ein etwaig abgebrochenes Rollenhalterteil samt Tastrolle abfangbar ist.

Eine derartige Spurführungsvorrichtung ist aus der DE-A1 3 103 488 bekannt. Dort ist ein Rollenhalter vorgesehen, der zwar aus mehreren Teilen zusammengesetzt, durch Verschweißung derselben aber einstückig gemacht ist. Dies führt dazu, daß im Falle eines Bruches des Rollenhalters dieser in seiner Gesamtheit ersetzt werden muß. Darüber hinaus weist der bekannte Rollenhalter eine beiderseits von Querschlitzen durch entsprechende Umfangsabschnitte gegebene Sollbruchstelle auf. Hierdurch ergibt sich im Rollenhalter eine ungleichmäßige Kräfteverteilung, was zu Verbiegungen bei zu starker, aber für einen Bruch nicht ausreichender Beaufschlagung von der Tastrolle her führen kann. Schließlich handelt es sich bei dem bekannten Rollenhalter um ein ortsfest angeordnetes Bauteil, mit der Folge, daß für die Höhenverstellung und Spurweiteneinstellung der Tastrolle andere, in der Regel sehr aufwendige Verstelleinrichtungen vorgesehen sein müssen.

Es ist daher Aufgabe der Erfindung, eine Spurführungseinrichtung der eingangs genannten Art so auszubilden, daß in der Sollbruchebene des Rollenhalters günstigere Kräfteverhältnisse gegeben sind, ferner bei einem Bruch des Rollenhalters dieser nicht in seiner Gesamtheit ausgetauscht werden muß und außerdem durch einfache Mittel eine Spurweiteneinstellung und Höhenverstellung der Tastrolle möglich ist.

Diese Aufgabe ist erfindungsgemäß durch die im kennzeichnenden Teil des Anspruches 1 angegebenen Mittel gelöst.

Dadurch, daß der Rollenhalter aus lösbar, miteinander verbundenen Funktionsbauteilen, nämlich einem Kopfteil, einem Mittelteil und einem Anschlußteil besteht, ist es möglich, daß im Falle eines Bruches des Rollenhalters dieser nicht in seiner Gesamtheit ausgetauscht werden muß. Es genügt, um diesen zu reparieren und wieder funktionsfähig zu machen, lediglich das an der Sollbruchstelle gebrochene Mittelteil durch ein neues zu ersetzen und dieses mit den anderen Rollenhalter-Teilen zu verschrauben.

Dadurch, daß das Mittelteil außerdem über einen ringförmigen Sollbruchstellen-Querschnitt verfügt, ist im Rollenhalter im Bereich der Sollbruchstelle eine ringsum gleiche Kräfteverteilung gegeben, wodurch ein ungewolltes Verbiegen des Rollenhalters durch übergroße Stöße oder Krafteinwirkungen von der Tastrolle her vermeidbar ist.

Darüber hinaus ist der Rollenhalter insgesamt auch so ausgebildet, daß über Einzelteile desselben eine einfache Rollenhöhenverstellung und Spurweiteneinstellung durchführbar ist.

Nachstehend ist die erfindungsgemäße Spurführungseinrichtung anhand eines in der Zeichnung dargestellten Ausführungsbeispieles näher erläutert. In der Zeichnung zeigen:

Fig. 1 einen vertikalen Längsschnitt durch die Halterung einer Tastrolle an einem spurführbaren Fahrzeug,

Fig. 2 die Tastrollen-Halterung nach Fig. 1 in Draufsicht mit partiell aufgeschnittener Schutzhaube,

Fig. 3 einen Schnitt durch die Tastrollen-Halterung entlang der Schnittlinie III–III von Fig. 1,

Fig. 4 einen Schnitt durch die Tastrollen-Halterung entlang der Schnittlinie IV–IV von Fig. 1,

Fig. 5 einen Schnitt durch die Tastrollen-Halterung entlang der Schnittlinie V–V von Fig. 1, und

Fig. 6 einen Schnitt durch die Tastrollen-Halterung entlang der Schnittlinie VI–VI von Fig. 1.

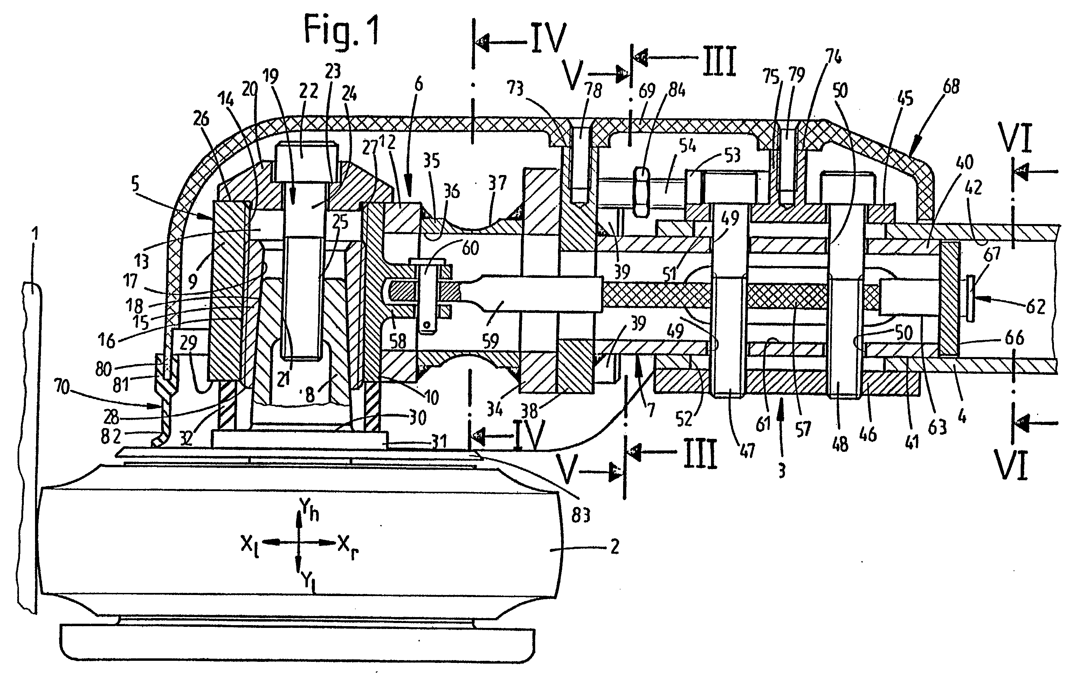

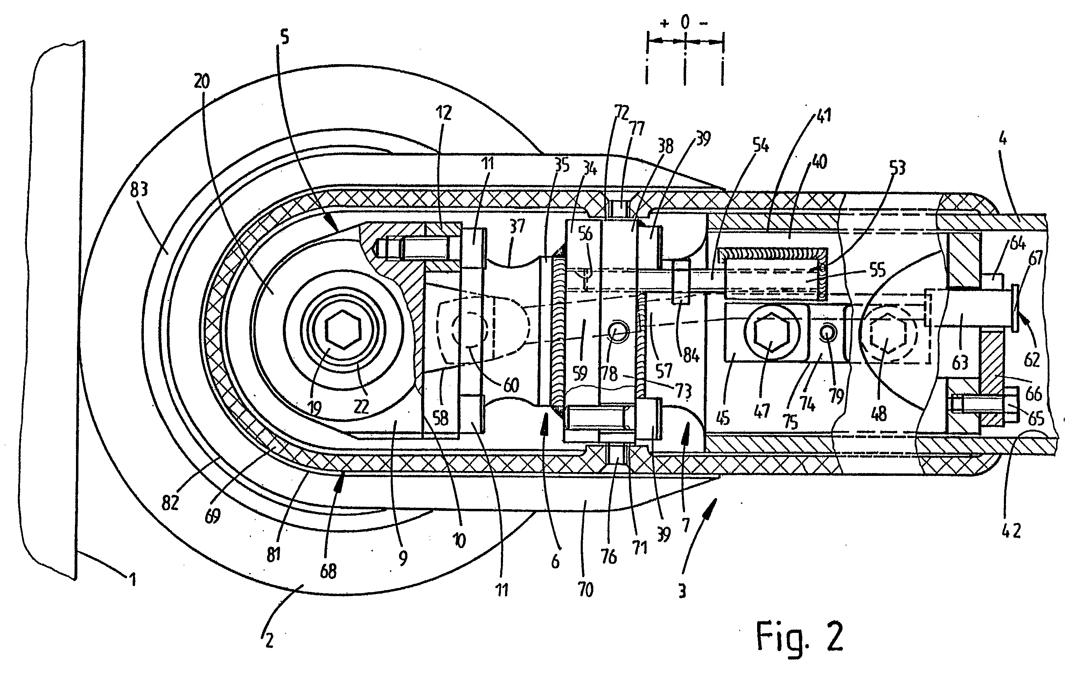

In Verbindung mit einem spurführbaren Fahrzeug, beispielsweise Omnibus, ist eine Spurführungseinrichtung notwendig, die auf die Lenkung des Fahrzeuges einwirkt und die entsprechenden Führungsbefehle von wenigstens einem Spurführungsleitorgan bekommt. Die nachstehend erläuterte Spurführungseinrichtung arbeitet mit beiderseits des zu führenden Fahrzeuges angeordneten Spurführungsleitwänden zusammen. Eine solche Spurführungsleitwand ist in den Fig. 1 und 2 ausschnittsweise dargestellt und mit (1) bezeichnet. Diese Spurführungsleitwände sind fester Bestandteil der Fahrbahn und bilden die Fahrbahnbegrenzung für das Fahrzeug während des Spurführungsbetriebes.

Die Spurführungseinrichtung weist wenigstens eine, einer Fahrzeugseite zugeordnete, im Spurführungsbetrieb mit einer Spurführungsleitwand (1) zusammenwirkende Tastrolle (2) auf, die an einem Rollenhalter (3) drehbar gelagert ist. Der Rollenhalter (3) selbst ist an einem Tastarm (4) befestigt, der in Verbindung mit anderen, nicht dargestellten Teilen der Spurführungseinrichtung auf die Lenkung des Fahrzeuges einwirkt.

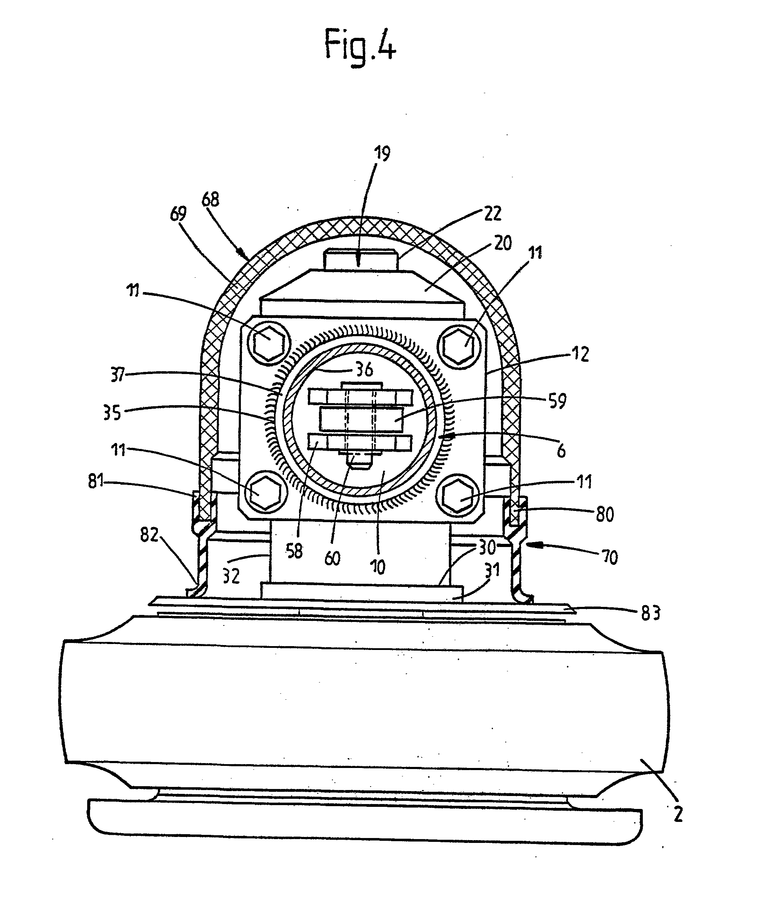

Der Rollenhalter (3) besteht aus mehreren lösbaren miteinander verbundenen Funktionsbauteilen, nämlich einem Kopfteil (5), einem Mittelteil (6) und einem Anschlußteil (7). Über letzteres ist der Rollenhalter (3) am Tastarm (4) angeschlossen. Das Kopfteil (5) ist für die Aufnahme eines Rollenachszapfens (8) und einer Höhenverstelleinrichtung für die Tastrolle (2) ausgebildet. Im einzelnen besteht das Kopfteil (5) aus einem Lagerkörper (9), an dem eine äußere ebene Anlagefläche (10) zur Abstützung des Mittelteiles (6) des Rollenhalters (3) vorhanden ist. Außerdem sind in diesem Lagerkörper (9) mehrere Gewindebohrungen für die Schraubbefestigung des Rollenhalter-Mittelteiles (6) vorhanden. Die diesbezüglichen vier Schrauben (11) sind im Schnitt gemäß Fig. 4 ersichtlich. Letztere durchdringen mit ihren Schraubenschäften entsprechende Durchgangsbohrungen im äußeren Flansch (12) des Mittelteiles (6) und greifen in die genannten Gewindebohrungen des Lagerkörpers (9) ein. Der Lagerkörper (9) ist des weiteren mit einer zentralen, koaxial zur Tastrollenachse angeordneten Durchgangsbohrung (13) versehen. In letztere ist ein durchgehendes Innengewinde (14) eingeschnitten. In diesem Innengewinde (14) ist mit ihrem durchgehenden Außengewinde (16) eine Justierhülse (15) eingeschraubt, die ein Teil der Rollenhöhenverstelleinrichtung bildet. Diese Justierhülse (15) weist eine koaxial zur Tastrollenachse angeordnete und sich durchmessermäßig zur Tastrolle (2) hin erweiternde Durchgangskegelbohrung (17) auf, an die ein Außenkegel (18) am Rollenachszapfen (8) angepaßt ist. Als weiteres Teil der Rollenhöhenverstelleinrichtung ist eine ebenfalls koaxial zur Tastrollenachse angeordnete Zugspindel (19) vorgesehen, die einenendes in einer am Lagerkörper (9) des Kopfteiles (5) abgestützten Spannplatte (20) und anderenendes in einer Aufnahmebohrung (21) des Rollenachszapfens (8) gefaßt ist. Diese Fassung der Zugspindel (19) ist dabei so, daß durch Drehen der letzteren der Rollenachszapfen (8) mit seinem Außenkegel (18) in die Durchgangskegelbohrung (17) der Justierhülse (15) hineinziehbar ist. Für diese axiale Vorschubbewegung ist entweder in der Spannplatte (20) oder der Aufnahmebohrung (21) ein entsprechendes Gewinde vorzusehen und außerdem die Zugspindel (19) an einer Schulter entweder der Spannplatte (20) oder des Rollenachszapfens (8) abzustützen. Beim dargestellten Ausführungsbeispiel ist die Zugspindel (19) mit ihrem Kopf (22) an einer stirnseitig an der Spannplatte (20) vorhandenen Auflagefläche (23) abgestützt, mit ihrem Schaft (24) in einer Durchgangsbohrung der Spannplatte (20) koaxial geführt und mit ihrem Zuggewinde (25) in ein in die Aufnahmebohrung (21) des Rollenachszapfens (8) eingeschnittenes Innengewinde eingeschraubt. Die Spannplatte (20) selbst ist an einer oberen ebenen Stirnfläche (26) am Lagerkörper (9) abgestützt und in dessen Durchgangsbohrung (13) mittels eines axial vorspringenden Zentrierzapfens (27) zentriert. Für eine entsprechende Einstellung der richtigen Rollenhöhe in Bezug auf die Spurführungsleitwand (1) ist zunächst die Justierhülse (15) in eine entsprechende Axialposition innerhalb des Lagerkörpers (9) zu bringen und dann durch Anziehen der Zugspindel (19) der Rollenachszapfen (8) in kraftschlüssige Verbindung mit der Justierhülse (15) zu bringen. Die richtige Einstellung der Justierhülse (15) kann über deren Unterkante (28) in Bezug auf die Unterkante (29) des Lagerkörpers (9) gefunden und überprüft werden. Nach einem derartigen Einstellvorgang wird zwischen die Unterkante (29) des Lagerkörpers (9) und die Oberkante (30) eines Bundes (31) am Rollenachszapfen (8) ein Dichtring (32) eingepaßt. Dieser Dichtring (32) kann in sich jedoch auch so flexibel sein, daß er alle Einstellbewegungen mitmacht. Die vorstehend beschriebene Höhenverstellbarkeit der Tastrolle (2) über die Höhenverstelleinrichtung ist in Fig. 1 in dem dort im Bereich der Tastrolle (2) eingezeichneten Verstellkreuz durch die mit $y_h$ und $y_l$ bezeichneten Pfeile symbolisiert.

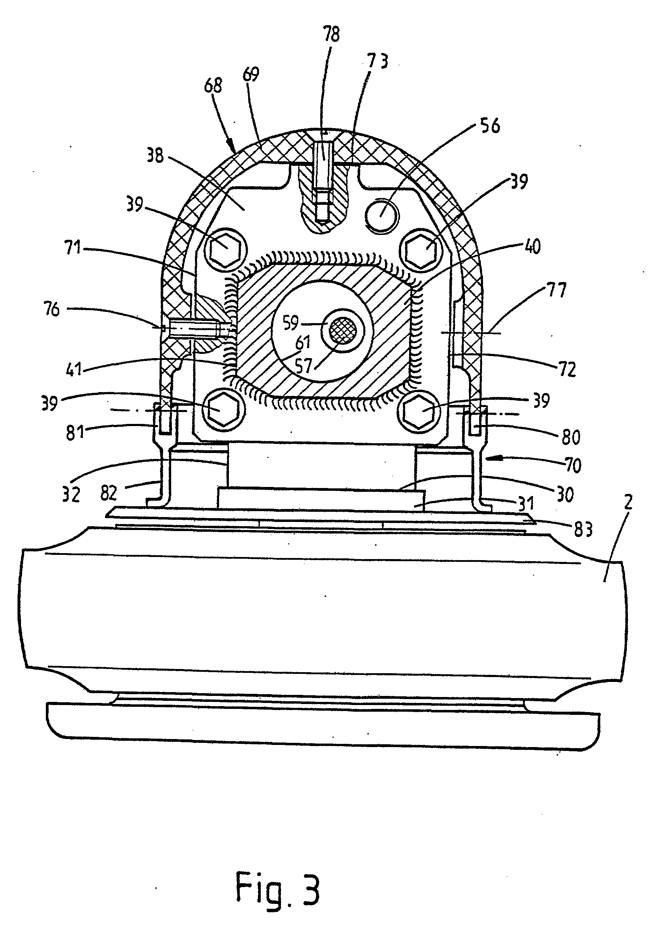

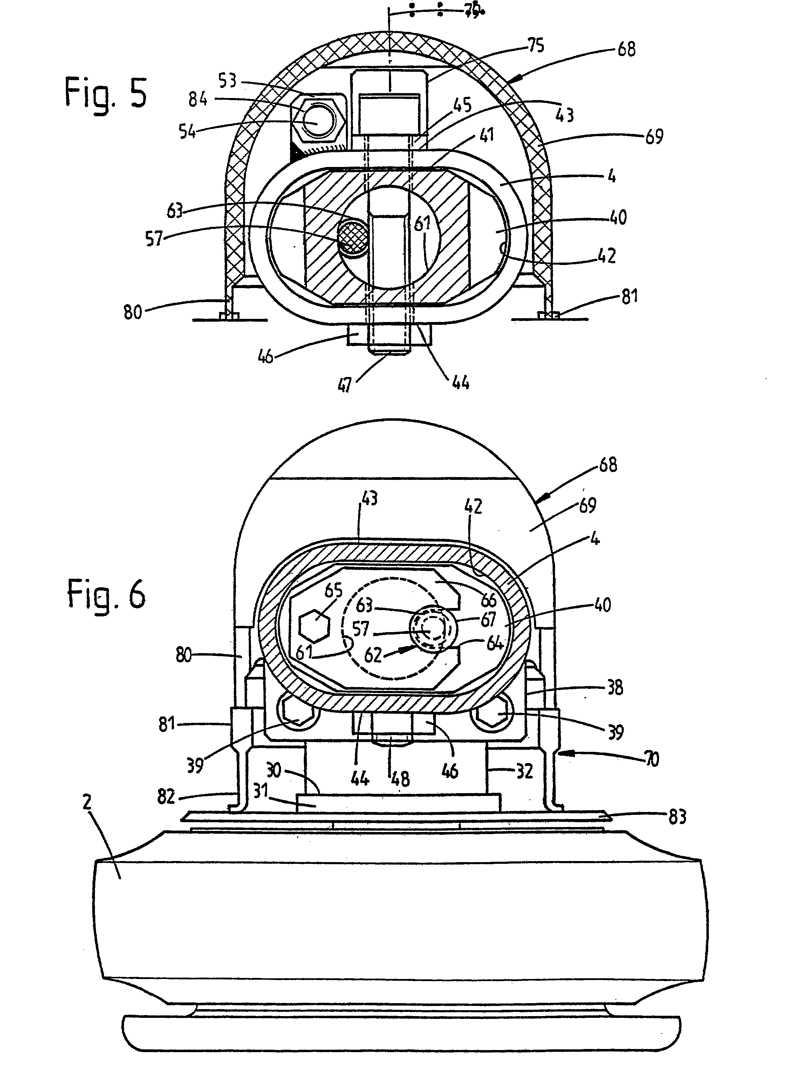

Das Mittelteil (6) des Rollenhalters (3) besteht außer dem bereits erwähnten äußeren Flansch (12) noch aus einem inneren Flansch (34) und einem die beiden Flansche (12, 34) distanzierenden Sollbruchstück (35). Letzteres ist durch einen, einen kreisförmigen Ringquerschnitt aufweisenden Rohrabschnitt gebildet. Die beiden Flansche (12, 34) sind durch ebene Platten gebildet und jeweils an einer Stirnseite des Sollbruchstückes (35) angeschweißt. Jeder der beiden Flansche (12, 34) weist darüber hinaus eine zur Innenbohrung des Sollbruchstückes fluchtende und durchmessergleiche Durchgangsbohrung auf, so daß im Mittelteil (6) eine insgesamt durchgehende Bohrung (36) gegeben ist. Das Mittelteil (6) ist des weiteren für den Zweck ausgebildet, eine Sollbruchstelle des Rollenhalters (3) zu bilden. Eine derartige Sollbruchstelle ist aus Sicherheitsgründen, und insbesondere um Beschädigungen an den am Rollenhalter angeschlossenen weiteren Teilen der Spurführungseinrichtung sowie der Fahrzeuglenkung zu vermeiden, notwendig. Diese Sollbruchstelle ist am Mittelteil (6), dort an dessen rohrförmigem Sollbruchstück (35) etwa in der Mitte von dessen Längsausdehnung durch eine umlaufende Nut (37) mit kreisbogenförmiger Nutgrundkontur realisiert, so daß ein ringförmiger, ringsum gleichbleibender Sollbruchstellen-Querschnitt an der tiefsten Stelle der Nut (37) in Verbindung mit der Wand der Innenbohrung (36) im Sollbruchstück (35) gegeben ist. An der äußeren, ebenen Stirnseite des inneren Flansches (34) des Mittelteiles (6) ist das Anschlußteil (7) mit seinem ebenen Anschlußflansch (38) angeschlossen. Für eine Befestigung des letzteren am Mittelteil (6) sind in beiden Flanschen (34, 38) Vorkehrungen für eine Schraubbefestigung vorhanden. Bei diesen Vorkehrungen handelt es sich um Gewindebohrungen oder Durchgangsbohrungen zur Aufnahme von vier Schrauben (39), deren exakte Anordnung aus der Schnittdarstellung von Fig. 3 ersichtlich ist. Das Anschlußteil (7) des Rollenhalters (3) besteht aus dem bereits erwähnten Anschlußflansch (38) und aus einem Schiebezylinder (40), der eine von der Kreisform abweichende Außenkontur (41) – siehe Fig. 3, 5 und 6 – aufweist, über die er verdrehungsgesichert, aber axial verschiebbar in einer entsprechend angepaßten Aufnahmebohrung (42) des zumindest an seinem diesbezüglichen freien Ende rohrförmigen Tastarmes (4) aufgenommen ist. Aufgrund dieser Längsführung und Längsverschiebbarkeit des Anschlußteiles (7) im Tastarm (4) ist eine Spurweiteneinstellung beiderseits einer Neutralstellung "0" nach (+) oder (–) – siehe das diesbezügliche Schema in Fig. 2 neben der Baugruppendarstellung – oder, so wie im Verstellkreuz in Fig. 1 durch die mit $x_l$ und $x_r$ bezeichneten Pfeile möglich. Darüber hinaus ist dem Anschlußteil (7) eine Arretierungsvorrichtung zugeordnet, mit der der Rollenhalter (3) innerhalb eines vorgegebenen Verschiebeweges an beliebiger Einstellposition festlegbar ist. Im einzelnen besteht die besagte Arretierungsvorrichtung aus zwei an diametral gegenüberliegenden, zueinander parallelen Außenflächen (43, 44) des Tastarmes (4) abgestützten Klemmplatten (45, 46) – siehe Fig. 1 und 5 – die durch eine Klemmverschraubung aufeinanderzu an den Tastarm (4) anpressbar sind. Die Klemmverschraubung besteht aus wenigstens einer Schraube, im dargestellten Ausführungsbeispiel jedoch aus zwei Klemmschrauben (47, 48), die mit ihren Schraubenschäften jeweils Bohrungen in der Klemmplatte (45) durchdringen, ferner jeweils in einer Querbohrung (49 bzw. 50) des Schiebezylinders (40) diesen vollständig durchdringend gefaßt sind und außerdem zwei, aneinander diametral gegenüberliegenden Stellen im Tastarm (4) gegebene Längsnuten (51, 52) durchdringen, die im Tastarm (4) parallel zur Längserstreckung des Verschiebeweges eingeformt sind und durch ihre Längserstreckung den Verschiebeweg des Schiebezylinders (40) für die Spurweiteneinstellung der Tastrolle (2) vorgeben und begrenzen. Im dargestellten Ausführungsbeispiel stützen sich dabei die Klemmschrauben (47) mit ihren gegenüber den Schraubenschäften durchmessergrößeren Schraubenköpfen an ebenen Auflageflächen der Klemmplatte (45) ab und greifen mit ihren Gewindeschaftabschnitten in entsprechende Gewindebohrungen der Klemmplatte (46) ein, so daß durch Anziehen der beiden Klemmschrauben (47, 48) die beiden Klemmplatten (45, 46) aufeinanderzu bewegt und an die Außenflächen (43, 44) des Tastarmes (4) angepreßt werden.

Um eine feinfühlige Verstellung des Rollenhalters (3) bei der Spurweiteneinstellung zu ermöglichen und gleichzeitig eine zusätzliche Verschiebesicherung zu schaffen, ist der Arretierungseinrichtung eine Stelleinrichtung zugeordnet, mit der die Axialverschiebung des Rollenhalters (3) am Tastarm (4) in der einen oder anderen Richtung durchführbar ist. Im einzelnen besteht diese Stelleinrichtung aus einem am Tastarm (4) ortsfest angeordneten, insbesondere angeschweißten Stellbock (53) – siehe insbesondere Fig. 5 – und einem Stellgewindebolzen (54), dessen eines Ende in den Stellbock (53), dessen anderes Ende in den Anschlußflansch (38), gegebenenfalls auch in den inneren Flansch (34) des Mittelteiles (6) eingreift und dort in jeweils einer Aufnahmebohrung (55 bzw. 56), von denen wenigstens eine ein Stellgewinde aufweist, gefaßt ist.

Darüber hinaus sind am Stellgewindebolzen (54) ortsfeste Vorkehrungen (84), z.B. eine angeschweißte Sechskantmutter vorgesehen, über die dessen Verdrehung mittels eines Hilfswerkzeuges möglich ist. Der Stellgewindebolzen (54) selbst verläuft achsparallel zur Verschieberichtung und erlaubt so, wenn er in Rotation versetzt wird, eine handhabungsgerechte und exakte Einstellung des Rollenhalters (3) in jede gewünschte bzw. aufgrund der gegebenen Spurführungsleitwand (1) notwendige Einstellung.

Es kann nun beim Betrieb des Fahrzeuges trotz exakter Spurführung, beispielsweise beim Einfädeln in die Spur oder bei Überfahren eines Hindernisses innerhalb der Spurführungsfahrbahn der Fall auftreten, daß die von der Tastrolle (2) her in die Spurführungseinrichtung eingeleitete Belastung zu groß wird, in welchem Fall dann der Rollenhalter (3) an der an dessen Mittelteil (6) gegebenen Sollbruchstelle bricht. Um zu vermeiden, daß das abgebrochene Teil samt Tastrolle (2) vom Fahrzeug wegfliegt, ist innerhalb des Rollenhalters (3) ein dieses besagte Wegfliegen des abgebrochenen Rollenhalterteiles samt Tastrolle (2) verhinderndes Fangseil (57) vorgesehen. Dieses Fangseil ist im Rollenhalter (3) diesseits der Sollbruchstelle am Kopfteil (5) und jenseits der Sollbruchstelle am Anschlußteil (7) angelenkt. Dabei ist zur Festlegung des äußeren Endes des Fangseiles (57) am Lagerkörper (9) des Kopfteiles (5) an dessen Anlagefläche (10) axial vorspringend, ein Lagerauge (58) vorgesehen, in das das äußere Anschlußstück (59) des Fangseiles (57) mittels eines Bolzens (60) arretiert ist. Um eine möglichst sichere Auffangung eines eventuell abgebrochenen Rollenhalterteiles zu gewährleisten, andererseits aber eine Behinderung der Ein- bzw. Verstellung des Rollenhalters (3) in Bezug auf den Tastarm (4) zu vermeiden, ist das sich mit dem äußeren Anschlußstück (59) innerhalb der Innenbohrung (36) des Mittelteiles (6) erstreckende Fangseil (57) auch durch eine zentrale, koaxial zum Verschiebeweg angeordnete, im Anschlußteil (7) ausgebildete Durchgangsbohrung (61) hindurch und an den Schraubenschäften der Klemmschrauben (47, 48) vorbeigeführt sowie an seinem inneren Ende über einen Haltekopf (62) im Bereich des inneren Endes des Schiebezylinders (40) arretiert. Der Haltekopf (62) besteht dabei aus einer zylindrischen, fest mit dem inneren Ende des Fangseiles (57) verbundenen Fanghülse (63), die durch eine Fangöffnung (64) in einer am inneren Ende des Schiebezylinders (40) angeordneten und dort mittels einer Schraube (65) befestigten Fangplatte (66) hindurchgeführt und mittels eines gegenüber der Fanghülse (63) durchmessergrößeren Fangkopfes (67) gekontert ist. Durch eine derartige Ausbildung des inneren Endes des Fangseiles (57) ist eine Verstellung des Rollenhalters (3) in Bezug auf den Tastarm (4) nicht behindert.

Zum Schutz des Rollenhalters (3) und des Tastrollenanschlusses an letzterem ist eine Schutzhaube (68) vorgesehen. Die Schutzhaube (68) ist im vorliegenden Fall zweiteilig ausgebildet und besteht aus einem oberen Haubenteil (69), z.B. aus glasfaserverstärktem Kunststoff und einem unteren Haubenteil (70) z.B. aus flexiblem Gummi- oder Kunststoffmaterial. Das obere Haubenteil (69) ist an mehreren Stellen des Rollenhalters (3) abgestützt, nämlich an beiden Seitenflächen (71, 72) und der oberen Stirnfläche (73) am Anschlußflansch (38) des Anschlußteiles (7), des weiteren an der äußeren Stirnfläche (74) eines an der Klemmplatte (45) vorspringend angeordneten Lagerbockes (75) und im Bereich der genannten Stellen jeweils mittels Schrauben (76, 77, 78, 79) befestigt. Das untere Haubenteil (70) ist an einem unten am oberen Haubenteil (69) vorhandenen Anschlußsteg (80) mittels eines Klemmwulstes (81) erfaßt und gehalten. An den Klemmwulst (81) schließt sich eine flexible Manschette (82) an, die mit ihrem äußeren Ende unabhängig von der axialen Einstellposition der Tastrolle (2) an einem Auflageteller (83) abgestützt ist, der einen Teil des Rollenachszapfens (8) bildet und sich an dessen Bund (31) anschließt. Mit einer derart ausgebildeten Schutzhaube sind am Fahrzeug während dessen Einsatz alle wesentlichen Teile des Rollenhalters gegen Regenwasser, Schnee, Hagel, Steinschlag oder dergleichen geschützt. Außerdem ist durch die Flexibilität der Manschette (82) am unteren Haubenteil (70) jederzeit eine beliebige Höheneinstellung der Tastrolle (2) durchführbar.

**Patentansprüche**

1. Spurführungseinrichtung für ein spurführbares Fahrzeug mit wenigstens einer, einer Fahrzeugseite zugeordneten, im Spurführungsbetrieb mit einer Spurführungsleitwand (1) zusammenwirkenden Tastrolle, die an einem Rollenhalter (3) angeordnet ist, der an einem Tastarm (4) befestigt ist und eine Sollbruchstelle (37) sowie ein diesseits und jenseits der letzteren befestigtes Fangseil (57) aufweist, mit dem ein etwaig abgebrochenes Rollenhalterteil samt Tastrolle abfangbar ist, dadurch gekennzeichnet,
– daß der Rollenhalter (3) aus mehreren lösbar untereinander verbundenen Funktionsteilen besteht, nämlich einem
  a) Kopfteil (5) mit Tastrollenhöhenverstelleinrichtung,
  b) Mittelteil (6) mit ringförmigem Sollbruchstellen-querschnitt (37),
  c) Anschlußteil (7) mit Arretierungsvorrichtung, über das der Rollenhalter (3) geführt ist, für eine Spurweiten-einstellung am Tastarm (4) geführt, längs zu diesem verschiebbar und mittels der Arretierungsvorrichtung innerhalb des Verschiebeweges an beliebiger Position festlegbar ist, und
– daß das Fangseil (57) einerseits am Kopfteil (5), andererseits am Anschlußteil (7) des Rollenhalters (3) angelenkt ist.

3. Spurführungseinrichtung nach Anspruch 1, dadurch gekennzeichnet, daß das Kopfteil (5) des Rollenhalters (3) aus einem Lagerkörper (9) besteht, der eine äußere ebene Anlagefläche (10) für die Abstützung des Mittelteiles (6) und Gewindebohrungen für die Schraubbefestigung des letzteren aufweist, der ferner im Bereich der Anlagefläche (10) ein Lagerauge (58) zur lösbaren Anlenkung des äußeren Fangseilendes (59) und außerdem eine zentrale, koaxial zur Tastrollenachse verlaufende, mit einem Innengewinde (14) versehene Durchgangsbohrung (13) besitzt.

4. Spurführungseinrichtung nach Anspruch 3, dadurch gekennzeichnet, daß die Tastrollenhöhenverstelleinrichtung unter anderem aus einer Justierhülse (15) besteht, die ein Außengewinde (16), über das sie im Innengewinde (14) der Durchgangsbohrung (13) im Lagerkörper (9) axial verstellbar ist sowie eine koaxial zur Tastrollenachse angeordnete und sich zur Tastrolle (2) hin erweiternde Durchgangskegelbohrung (17) aufweist, an die ein Außenkegel (18) an dem die Tastrolle (2) lagernden Rollenachszapfen (8) angepaßt ist, und daß als weiteres Teil der Tastrollenhöhenverstelleinrichtung eine koaxial zur Tastrollenachse angeordnete Zugspindel (19) vorgesehen ist, die einenendes formschlüssig in einer am Lagerkörper (9) kopfseitig angeordneten Spannplatte (20), anderenendes in einer Aufnahmebohrung (21) des Rollenachszapfens (8) gefaßt ist und durch Drehen ein Hineinziehen des Rollenachszapfens (8) in die Durchgangskegelbohrung (17) der Verstellhülse soweit, bis eine kraftschlüssige Verbindung hergestellt ist, ermöglicht.

5. Spurführungseinrichtung nach Anspruch 1, dadurch gekennzeichnet, daß das Mittelteil (6) des Rollenhalters (3) eine zentrale Durchgangsbohrung (36) aufweist und aus einem durch einen Rohrabschnitt gebildeten Sollbruchstück (35) sowie zwei stirnseitig desselben angeordneten Flanschen (12, 34) mit ebenen äußeren Stirnflächen besteht, und daß am äußeren Flansch (12) Löcher für eine Schraubenschaftdurchführung zur Befestigung des Mittelteiles (6) am Kopfteil (5) und am inneren Flansch (34) Vorkehrungen – Gewindebohrungen oder Durchgangsbohrungen – für eine Schraubbefestigung des Mittelteiles (6) am Anschlußteil (7) des Rollenhalters (3) vorhanden sind.

6. Spurführungseinrichtung nach Anspruch 5, dadurch gekennzeichnet, daß der ringförmige Sollbruchstellenquerschnitt am Sollbruchstück (35) des Mittelteiles (6) durch eine dort etwa in der Mitte dessen Längserstreckung außen umlaufende Ringnut (37) mit kreisbogenförmigem Nutgrund gebildet ist, dessen tiefste Stelle in Verbindung mit der Wand der zentralen Durchgangsbohrung (36) den umlaufend konstanten Sollbruchquerschnitt ergibt.

7. Spurführungseinrichtung nach Anspruch 5, dadurch gekennzeichnet, daß die beiden Flansche (12, 34) des Mittelteiles (6) an dessen Sollbruchstück (35) angeschweißt sind.

8. Spurführungseinrichtung nach Anspruch 1, dadurch gekennzeichnet, daß das Anschlußteil (7) des Rollenhalters (3) aus einem Schiebezylinder (40) und einem an diesem angeschweißten Anschlußflansch (38) besteht, mit dem es am Mittelteil (6) an dessen innerem Flansch (34) über Schraubenlöcher durchdringende Schrauben (39) befestigt ist, und daß der Schiebezylinder (40) eine von der Kreisform abweichende Außenkontur (41) aufweist, über die er verdrehungsgesichert, aber axial verschiebbar in einer entsprechend angepaßten Aufnahmebohrung (42) im rohrförmigen freien Ende des Tastarmes (4) aufgenommen ist.

9. Spurführungseinrichtung nach Anspruch 8, dadurch gekennzeichnet, daß der Schiebezylinder (40) eine koaxial zur Längsachse verlaufende Durchgangsbohrung (61) für eine Hindurchführung des Fangseiles (57) aufweist, das an seinem inneren Ende mit einem Haltekopf (62) versehen und in einer an der inneren Stirnseite des Schiebezylin-ders (40) befestigten Fangplatte (66) dort in einer Fangöffnung (64) so gefaßt ist, daß eine Verschiebung des Schiebezylinders (40) im Tastarm (4) nicht behindert ist.

10. Spurführungseinrichtung nach Anspruch 1, dadurch gekennzeichnet, daß die dem Anschlußteil (7) des Rollenhalters (3) zugeordnete Arretierungsvorrichtung aus zwei an diametral gegenüberliegenden, zueinander parallelen Außenflächen (43, 44) des Tastarmes (4) abgestützten Klemmplatten (45, 46) besteht, die durch eine Klemmverschraubung aufeinanderzu an den Tastarm (4) anpressbar sind, welche Klemmverschraubung aus wenigstens einer Klemmschraube, vorzugsweise zwei Klemmschrauben (47, 48) besteht, wobei jede derselben mit ihrem Schraubenschaft die Klemmplatte (45) durchdringt und in einer Querbohrung (49 bzw. 50) des Schiebezylinders (40), diesen senkrecht zur Längsachse durchdringend gefaßt ist und außerdem zwei aneinander diametral gegenüberliegenden Stellen des Tastarmes (4) gegebene Längsnuten (51, 52) durchdringt, die den Verschiebeweg des Verschiebezylinders (40) für die Spurweiteneinstellung über den Rollenhalter (3) vorgeben und begrenzen.

11. Spurführungseinrichtung nach Anspruch 10, dadurch gekennzeichnet, daß der Arretierungseinrichtung eine Stelleinrichtung zugeordnet ist, mit der eine Axialverschiebung des Rollenhalters (3) am Tastarm (4) in der einen oder anderen Richtung durchführbar ist, und die aus einem am Tastarm (4) außen ortsfest angeordneten Stellbock (53) sowie einem Stellgewindebolzen (54) besteht, der einerseits im Stellbock (53), andererseits im Anschlußflansch (38) des Anschlußteiles (7), gegebenenfalls auch im inneren Flansch (34) des Mittelteiles (6) in jeweils einer Aufnahmebohrung drehbar gefaßt ist, wobei wenigstens eine der Aufnahmebohrungen über ein Stellgewinde verfügt, und daß am Stellgewindebolzen Vorkehrungen (84) für eine Verdrehung desselben mittels eines Hilfswerkzeuges vorhanden sind.

12. Spurführungseinrichtung nach den Ansprüchen 2 und 8 bis 10, dadurch gekennzeichnet, daß die Schutzhaube (68) aus zwei Teilen zusammengesetzt ist, nämlich einem oberen Haubenteil (69) aus schlagzähem Kunststoffmaterial und einem unteren Haubenteil (70) aus flexiblem Gummi- bzw. Kunststoffmaterial.

13. Spurführungseinrichtung nach Anspruch 12, dadurch gekennzeichnet, daß die Schutzhaube (68) am Rollenhalter (3) über eigene Vorsprünge oder am Rollenhalter, dort an verschiedenen Einzelteilen desselben vorgesehenen Anlageflächen abgestützt und in deren Bereich mittels Schrauben befestigt ist.

**Claims**

1. Track guide installation for a railborne vehicle, with at least one scanning roller which is associated with one side of the vehicle and which, in the track guiding operation, co-operates with a track guidance guide wall (1) and which is arranged on a roller holder (3) which is secured on a scanning arm (4) and which has a rated breaking point (37) and also a catch cable (57) which is secured on both sides of the breaking point and by means of which it is possible to recover a part of the roller holder together with the scanning roller, which possibly may break off, characterised
– in that the roller holder (3) consists of several operating parts which are detachably interconnected, namely of a
  a) head part (5) with scanning roller height adjustment device,
  b) central part (6) with ring shaped cross section of rated breaking point (37),
  c) connecting part (7) with retaining device over which the roller holder (3) is guided on the scanning arm (4) for a track width adjustment and is slidable along said arm and is capable of being fixed in any optional position within the slide path by means of the retaining device, and,

– that the catch cable (57) is articulated on the one side on the head part (5) and on the other side on the connecting part (7) of the roller holder (3).

2. Track guide installation according to claim 1, characterised in that the roller holder (3) is covered by a protective hood (68) which at least partially surrounds it and which, in particular, protects it from above.

3. Track guide installation according to claim 1, characterised in that the head part (5) of the roller holder (3) consists of a bearing body (9) which has an outer plane contact surface (10) for supporting the central part (6) and which has screwthreaded bores for securing the screws of the latter and which furthermore possesses, in the region of the contact surface (10), a bearing eye (58) for detachable articulation of the outside end (59) of the catch cable and in addition possesses a central throughbore (13) which extends coaxially to the scanning roller axis and which is provided with an internal screwthread (14).

4. Track guide installation according to claim 3, characterised in that the scanning roller height adjustment device consists of, inter alia, an adjusting sleeve (15) which has an external screwthread (16) over which it is axially adjustable in the internal screwthread (14) of the through-bore (13) in the bearing body (9), and also has a conical throughbore (17) which is arranged coaxially to the scanning roller axis and which widens in the direction towards the scanning roller (2) and to which an external cone (18) on the roller axis spindle (8) which supports the scanning roller (2) is adapted to fit, and in that as a further part of the scanning roller height adjustment device there is provided a draw spindle (19) which is arranged coaxially to the scanning roller axis and which at one end is form-lockingly gripped in a clamping plate (20) arranged on the bearing body (9) at the head end, and which at the other end is gripped in a socket bore (21) of the roller axis spindle (8) and which, by twisting, enables the roller axis spindle (8) to be withdrawn into the conical throughbore (17) of the adjusting sleeve for such distance until a force-locking connection is produced.

5. Track guide installation according to claim 1, characterised in that the central part (6) of the roller holder (3) has a central through-bore (36) and consists of a rated breaking fragment (35) formed by a tube section, and also two flanges (12, 34) arranged on the front side of same and having plane exterior front ends, and in that on the exterior flange (12) holes are present for the throughpassage of a screw shaft for securing the central part (6) on the head part (5), and on the inner flange (34), means – screwthreaded bores or throughbores – are provided for a screwed fastening of the central part (6) on the connecting part (7) of the roller holder (3).

6. Track guide installation according to claim 5, characterised in that the ring shaped cross section of rated breaking point on the rated breaking fragment (35) of the central part (6) is formed by an annular groove (37) which extends there, all around the outside, approximately in the middle thereof, and which has a circle-arc shaped groove bottom whose deepest place, in combination with the wall of the central through-bore (36), produces the cross section of rated breaking point, which is constant all the way around.

7. Track guide installation according to claim 5, characterised in that the two flanges (12, 34) of the central part (6) are welded onto the rated breaking fragment thereof (35).

8. Track guide installation according to claim 1, characterised in that the connecting part (7) of the roller holder (3) consists of a sliding cylinder (40) and of a connecting flange (38) welded thereon, whereby it is secured on the central part (6), on the inner flange (34) thereof, by means of screws (39) penetrating through screwholes, and in that the sliding cylinder (40) has an external contour (41) which deviates from the circular shape and through which it is secured against twisting but is received axially slidably in a socket bore (42) which is shaped correspondingly to fit it and which is in the tubular free end of the scanning arm (4).

9. Track guide installation according to claim 8, characterised in that the sliding cylinder (40) has a through-bore (61) which extends coaxially to the longitudinal axis and which is for a throughpassage of the catch cable (57) which is provided at its inner end with a holding head (62) and which is gripped in a catch opening (64) of a catch plate (66) secured on the inner front side of the sliding cylinder (40), in such manner that a displacement of the sliding cylinder (40) in the scanning arm (4) is not prevented.

10. Track guide installation according to claim 1, characterised in that the retaining device associated with the connecting part (7) of the roller holder (3) consists of two clamping plates (45, 46) which are supported upon exterior surfaces (43, 44) of the scanning arm (4) which lie diametrically opposite to one another and are parallel to one another, the said clamping plates being pressable onto the scanning arm (4), towards one another, with the aid of a screw clamping means, this latter consisting of at least one clamping screw, preferably two clamping screws (47, 48), in which case the screw shaft of each penetrates the clamping plate (45) and is gripped in a transverse bore (49 and/or 50) of the sliding cylinder (40), penetrating this latter perpendicularly to the longitudinal axis, and additionally penetrating two longitudinal grooves (51, 52) which are arranged on points of the scanning arm (4) lying diametrically opposite one another and which predetermine and limit the sliding path of the sliding cylinder (40) for the track width adjustment over the roller holder (3).

11. Track guide installation according to claim 10, characterised in that the retaining device is associated with a setting device whereby an axial displacement of the roller holder (3) on the scanning arm (4) is performable in the one or the other direction and which consists of a setting support (53) arranged externally and stationarily on the scanning arm (4) and also of a screwthreaded setting bolt (54) which is gripped rotatably – in each case in a socket bore – on the one hand in the setting support (53) and on the other hand in the connecting flange (38) of the connecting part (7) and optionally also in the inner flange (34) of the central part (6), at least one of the socket bores in this case having a setting screwthread at its disposal, and in that means (84) are provided on the screwthreaded setting bolt for a twisting thereof with the aid of an auxiliary tool.

12. Track guide installation according to one of the claims 2 and 8 to 10, characterised in that the protective hood (68) is composed of two parts, namely an upper hood part (69) made of impact-resistant synthetic plastics material, and a lower hood part (70) made of flexible rubber and/or synthetic plastics material.

13. Track guide installation according to claim 12, characterised in that the protective hood (68) is supported on the roller holder (3) by projections of its own, or on the roller holder, on contact surfaces there which are provided on various individual parts thereof, and is secured in the region of these by means of screws.

## Revendications

1. Installation de guidage de voie pour un véhicule guidé par une voie, comportant au moins un galet de détection associé à un côté du véhicule et qui en circulation sur la voie coopère avec une paroi de guidage de voie (1), galet porté par un support de galet (3) fixé à un bras de détection (4) et ayant une zone de rupture de consigne (37) et un câble d'accrochage (57) fixé de part et d'autre de celle-ci, câble qui retient la partie de support de galet ainsi que le galet de détection après une éventuelle rupture, caractérisée en ce que:
– le support de galet (3) se compose de plusieurs pièces fonctionnelles reliées entre elles de manière détachable, à savoir:
   a) une partie de tête (5) avec une installation de réglage de hauteur du galet de détection,
   b) une partie intermédiaire (6) avec une section annulaire de zone de rupture de consigne (37),
   c) une partie de raccordement (7) sur le dispositif de blocage, partie par laquelle le support de galet (3) est guidé sur le bras de détection (4) pour le réglage de la largeur de voie, en coulissant le long de ce bras et en pouvant être bloqué par le dispositif de blocage en une position quelconque de la course de réglage, et
– le câble d'accrochage (57) est articulé, d'une part, sur la partie de tête (5) et, d'autre part, sur la partie de raccordement (7) du support de galet (3).

2. Installation de guidage de voie selon la revendication 1, caractérisée en ce que le support de galet (3) est recouvert par un capot (68) qui l'entoure au moins partiellement et le protège notamment par le haut.

3. Installation de guidage de voie selon la revendication 1, caractérisée en ce que la partie de tête (5) du support de galet (3) se compose d'un corps de palier (9) qui présente une surface d'appui (10), extérieure, plane, pour servir d'appui à la partie intermédiaire (6) ainsi que des taraudages pour visser cette dernière partie, et au niveau de la surface d'appui (10) ils comportent un œillet (58) pour l'accrochage amovible de l'extrémité extérieure du câble d'accrochage (59) ainsi qu'un perçage traversant (13), central, coaxial à l'axe du galet de détection et qui est muni d'un filetage intérieur (14).

4. Installation de guidage de voie selon la revendication 3, caractérisée en ce que l'installation de réglage de hauteur du galet de détection se compose entre autre d'une douille d'ajustage (15) qui comporte un filetage extérieur (16) par lequel elle est réglable axialement par rapport au filetage intérieur (14) du perçage traversant (13) du corps de palier (9) et un perçage traversant, conique (17) allant en s'évasant vers le galet de détection (2), perçage coaxial à l'axe du galet de détection, et auquel est adapté un cône extérieur (18) portant le tourillon d'axe (8) muni du galet de détection (2) et en ce qu'une autre partie de l'installation de réglage en hauteur du galet de détection est une broche de traction (19) coaxiale à l'axe du galet de détection prise par une extrémité suivant une liaison par la forme dans une plaque de serrage (20) montée du côté de la tête sur le corps de palier (9) et dont l'autre extrémité est logée dans un perçage (21) du tourillon d'axe de galet (8) et qui par rotation permet de faire rentrer le tourillon d'axe (8) dans le perçage conique traversant (17) de la douille de réglage jusqu'à ce que soit établie une liaison par la force.

5. Installation de guidage de voie selon la revendication 1, caractérisée en ce que la partie intermédiaire (6) du support de galet (3) comporte un perçage traversant (36) central ainsi qu'une pièce de rupture de consigne (35) formée par un segment de tube et deux brides (12, 34) rapportées frontalement sur cette pièce et ayant des surfaces frontales extérieures planes et en ce que la bride extérieure (12) comporte des trous pour le passage du corps de vis servant à la fixation de la partie intermédiaire (6) sur la partie de tête (5) et en ce que la bride intérieure (34) comporte des moyens (taraudages ou perçages traversants) pour une fixation par vis de la partie intermédiaire (6) sur la partie de raccordement (7) du support de galet (3).

6. Installation de guidage de voie selon la revendication 5, caractérisée en ce que la section annulaire de la zone de rupture de consigne de la pièce de rupture de consigne (35) appartenant à la pièce intermédiaire (6) est formée par une rainure périphérique (37) prévue sensiblement au milieu de la longueur de la pièce intermédiaire et ayant un fond de rainure en forme d'art de cercle dont le point le plus bas donne en combinaison avec la paroi du perçage traversant (36), central, la section de rupture de consigne, constante, périphérique.

7. Installation de guidage de voie selon la revendication 5, caractérisée en ce que les brides (12, 34) de la partie intermédiaire (6) sont soudées sur sa pièce de rupture de consigne (35).

8. Installation de guidage de voie selon la revendication 1, caractérisée en ce que la pièce de raccordement (7) du support de galet (3) se compose d'un cylindre coulissant (40) et d'une bride de raccordement (38) soudée à ce cylindre, bride par laquelle ce cylindre est fixé sur la partie intermédiaire (6) au niveau de sa bride interne (34) par des trous de vis traversés par des vis (39) et en ce que le cylindre coulissant (40) présente un contour extérieur (41) non circulaire grâce auquel il est logé en étant bloqué en rotation mais coulissant axialement dans un logement (42) adapté à l'extrémité tubulaire libre du bras de détection (4).

9. Installation de guidage de voie selon la revendication 8, caractérisée en ce que le cylindre coulissant (40) comporte un perçage traversant (61) coaxial à l'axe longitudinal pour le passage du câble de retenue (57), perçage dont l'extrémité intérieure est munie d'une tête de fixation (62) et y est prise sur une plaque d'accrochage (66) fixée à la face frontale interne du cylindre coulissant (40) dans un orifice d'accrochage (64) pour ne pas interdire le coulissement du cylindre coulissant (40) dans le bras de détection (4).

10. Installation de guidage de voie selon la revendication 1, caractérisée en ce que le dispositif de blocage associé à la partie de raccordement (7) du support de galet (3) se compose de deux plaques de serrage (45, 46) appuyées contre deux surfaces extérieures (43, 44) du bras de détection (4), surfaces qui sont parallèles et diamétralement opposées, les plaques étant appliquées l'une contre l'autre et sur le bras de détection (4) par des vis de serrage, cette liaison par vis de serrage se composant d'au moins une vis de serrage et de préférence de deux vis de serrage (47, 48) et chacune traverse par son corps de vis la plaque de serrage (45) et est prise dans un perçage transversal (49, 50) du cylindre coulissant (40) en le traversant perpendiculairement à son axe longitudinal et en traversant en outre deux rainures longitudinales (51, 52) diamétralement opposées sur deux endroits opposés du bras de détection (4) et qui prédéterminent la course de coulissement du cylindre coulissant (40) pour régler la largeur de voie par l'intermédiaire du support de galet (3).

11. Installation de guidage de voie selon la revendication 10, caractérisée par une installation de réglage associée à l'installation de blocage, cette installation de réglage permettant un déplacement axial du support de galet (3) sur le bras de détection (4) dans l'une ou l'autre direction et cette installation comprend un bloc de réglage (53) monté de manière fixe extérieurement sur le bras de détection (4) ainsi que d'un goujon fileté (54) de réglage qui est monté à rotation, d'une part, dans le bloc de réglage (53), et, d'autre part, dans la bride de raccordement (38) de la pièce de raccordement (7) le cas échéant également dans la bride intérieure (34) de la pièce intermédiaire (6) dans chaque fois un perçage de réception et au moins l'un des perçages de réception est muni d'un filetage de réglage et en ce que des moyens (84) sont prévus sur le filetage de réglage pour permettre de faire tourner celui-ci à l'aide d'un outil auxiliaire.

12. Installation de guidage de voie selon les revendications 2 et 8 à 10, caractérisée en ce que le capot de protection (68) se compose de deux parties à savoir d'une partie supérieure (68) en une matière synthétique résistant aux chocs et d'une partie inférieure (70) en une matière synthétique ou en un caoutchouc souple.

13. Installation de guidage de voie selon la revendication 12, caractérisée en ce que le capot de protection (68) est appuyé sur le support de galet (3) par des parties en saillie qui sont propres au capot ou appartiennent au support de galet en s'appuyant sur des surfaces d'appui prévues sur différentes pièces et en étant fixé à leur niveau par des vis.

Fig.1

Fig. 2

Fig. 3

# Fig.4

Fig. 5

Fig. 6